# EUROPÄISCHE PATENTANMELDUNG

(11) **EP 0 948 117 A1**
(43) Veröffentlichungstag der Anmeldung: **06.10.1999**
(21) Anmeldenummer: 99105427.1
(22) Anmeldetag: 17.03.1999
(51) Int. Cl.: H02K 37/12

(54) **Aussenläuferschrittmotor mit zweipolig diametral magnetisiertem Permanentmagnetrotor**

(30) Priorität: 04.04.1998 DE 19815231
(71) Anmelder: Mannesmann VDO Aktiengesellschaft, 60388 Frankfurt am Main (DE)
(72) Erfinder: Weiand, Frank, 60385 Frankfurt (DE); Vorberg, Thomas, 63743 Aschaffenburg (DE)
(74) Vertreter: Klein, Thomas, Dipl.-Ing.

(57) **Zusammenfassung**

Die Erfindung betrifft einen Außenläuferschrittmotor mit einem Stator (2) mit einer Anzahl n von sternförmig in gleichen Winkelabständen von 360°/n angeordneten Statorbeinen (2a bis 2c), auf denen jeweils Magnetspulen (3a bis 3c) zur Erzeugung des Drehfeldes angeordnet sind, und einem zweipolig diametral magnetisiertem Permanentmagnetrotor (5), der Glockenform hat und auf dessen Wänden sich die Pole befinden, auf einer Rotorwelle (6), die entlang der Achse der Glocke und entlang einer zu einer durch die Statorbeinanordnung gelegten Ebene senkrecht und durch die Mitte der Statorbeinanordnung verlaufenden Achse angeordnet ist, bei dem der Stator in dem Rotor angeordnet ist.

Bei einem erfindungsgemäßen Außenläuferschrittmotor, der bei einfachem Aufbau ein hohes Drehmoment erzeugt und dessen Rotor in jede Winkelstellung gebracht und dort gegebenenfalls gehalten werden kann, werden die Magnetspulen einzeln mit um 360°/n phasenverschobenen Strömen bestromt.

## Beschreibung

Die vorliegende Erfindung betrifft Außenläuferschrittmotoren nach dem Oberbegriff des Anspruchs 1.

Schrittmotoren der eingangs erwähnten Art können als Motoren für Anzeigeinstrumente, zum Beispiel in Kraftfahrzeugen, verwendet werden. Dazu ist jedoch eine sehr flache Bauweise bei einem gleichzeitig hinreichend großen Drehmoment erforderlich. Darüber hinaus sollte der Rotor feinstufig einstellbar sein. Schließlich ist für die Anwendung eine einfache, sehr kostengünstige Produktionsweise erforderlich.

Aus der DE-OS 26 21 575 ist ein Außenläuferschrittmotor, dort Rotationsschrittschaltmotor genannt, mit den Merkmalen des Oberbegriffs des Anspruchs 1 bekannt. Der Motor dient jedoch der Schaltung der Einstellung von zwei festen Winkelpositionen des Rotors, wobei besonders auf Ausfallsicherheit abgestellt wird. Dazu enthält der Motor über die Merkmale im Oberbegriff des Anspruchs 1 hinaus feststehende Anschlagelemente außerhalb des Rotors und einen mit dem Rotor verbundenen radial abstehenden Arm, so daß die Bewegung des Rotors durch Anschlag des Arms an eines der Anschlagelemente auf die Bewegung im Winkelbereich zwischen den Anschlagelementen begrenzt wird. Die Magnetfelder, die die Kräfte auf den Rotor ausüben, werden mit durch Schalter betätigten Gleichströmen erzeugt. Durch geschickte Wahl der Polschuhform und -anordnung kann ein ausfallsicherer Betrieb in dem Sinn sichergestellt werden, daß bei Stromabschaltung der Rotor an einer festen Position festgehalten wird. In der Ausführungsform mit drei Statorspulen sind die Anschläge notwendig, um den Rotor in den Endstellungen zu verriegeln. Dieser Motor kann also nur Schritte von einer Position zu einer anderen Position hin ausführen, eine feinstufige Einstellung von Zwischenpositionen ist nicht möglich.

Ferner ist aus der EP 0 424 611 A1 ein elektrischer Außenläuferantriebsmotor, insbesondere für Steuer- und Regelzwecke bekannt. Er weist jedoch eine Pol- und Spulenanordnung zur Erzeugung eines rotierenden Statorfeldes, dort Ankerfeld genannt, auf, die in ihren zeitlichen Statorfeld-Erregungsphasen und/oder geometrisch in Laufrichtung versetzte polbildende Segmente enthält, die in mehreren quer zur Laufrichtung versetzten Spuren angeordnet sind. Insbesondere ist eine Ausführungsform als Hysteresemotor mit Außenläufer beschrieben. Die Verwendung von zwei Polspuren bedeutet jedoch für einen Motor für Anzeigeinstrumente einen zu großen Aufwand.

Aufgabe der Erfindung ist es, einen Schrittmotor mit den Merkmalen des Oberbegriffs im Anspruch 1 vorzusehen, der bei einfachem Aufbau ein hohes Drehmoment erzeugt und dessen Rotor in jede Winkelstellung gebracht und dort gegebenenfalls gehalten werden kann.

Die Aufgabe wird gelöst durch einen Schrittmotor mit den Merkmalen des Anspruchs 1.

Gemäß dem Oberbegriff weist der Stator eine Anzahl n von sternförmig angeordneten und in der Statormitte miteinander verbundenen weichmagnetischen Statorbeinen auf, die in gleichen Wnkelabständen verteilte Pole bilden. Die Statorbeine können aus einfachem weichmagnetischem Material, z.B. Weicheisenblech oder einer Packung mehrerer Weicheisenbleche gebildet werden. Diese Statorbeine tragen Magnetspulen, deren Kern sie bilden. Der Rotor besteht aus einer Glocke mit Permanentmagneten, so daß die Glocke diametral zweipolig magnetisiert ist. Der Rotor sitzt auf einer Rotorwelle, die entlang einer senkrecht zu der durch die Statorbeine gebildeten Ebene, durch die Mitte der Statorbeinanordnung verlaufenden Achse angeordnet ist. Um eine möglichst günstige Führung des magnetischen Flusses am Luftspalt zwischen Statorpol und Rotor zu erzielen, enden die Statorbeine vorzugsweise in Polschuhen.

Erfindungsgemäß werden die Magnetspulen zur Ausbildung eines Drehfeldes getrennt bestromt. Durch eine um 360°/n phasenversetzte Bestromung der Magnetspulen wird ein Statordrehfeld erzeugt, das auf die Pole des Rotors ein Drehmoment ausübt. Zum Beispiel kann das Drehfeld mit um 360°/n verschobenen, bipolaren Ansteuerströmen erzeugt werden.

Durch die erfindungsgemäße Ansteuerung kann der Rotor auch in beliebige Positionen gedreht und dort gehalten werden, ohne daß zusätzliche mechanische Hilfsmittel notwendig wären.

Darüber hinaus kann der erfindungsgemäße Motor sehr flach gebaut werden und weist, da die Kräfte auf dem äußeren Umfang des Stators angreifen, ein großes Drehmoment auf. Weiterhin kann er durch die geringe Anzahl von Bauteilen und die Möglichkeit, ihn mit nur einer Fügerichtung zu montieren, sehr kostengünstig hergestellt werden.

Vorteilhafte Weiterbildungen sind durch die Merkmale in den Unteransprüchen gegeben.

Ist der Stator einteilig ausgebildet, ergibt sich zum einen eine einfache, sehr genaue Justierung der Statorpole gegeneinander; zum anderen bleiben die Fertigungskosten niedrig.

Die Magnetspulen können, fertig auf eine Spulenkörper gewickelt, einfach auf die Statorbeine aufgesteckt werden.

Vorteilhaft werden die Spulen jedoch direkt auf die Statorbeine gewickelt. Um dies zu vereinfachen, können die Beine Wickelraumbegrenzungen für die Wicklungen der Magnetspulen aufweisen. Dabei kann ein Teil der Wickelraumbegrenzung durch einen Polschuh gebildet werden. Durch die Sternform des Stators können die Spulen leicht von außen gewickelt werden.

Insbesondere in dem Fall, daß Wickelraumbegrenzungen vorgesehen sind, kann der Stator vorteilhaft im Metallspritzgußverfahren aus weichmagnetischem Metallpulver hergestellt werden.

Eine besonders geringe Bauhöhe läßt sich durch die Verwendung von Drähten erzielen, die sich möglichst dicht wickeln lassen. Zum anderen kann durch einen Spulenquerschnitt, der in der Ebene der Statorbeinanordnung breiter ist als senkrecht dazu, weitere Bauhöhe eingespart werden.

Die Rotorglocke kann auf ihrem Umfang zwei gegenüberliegend angeordnete flache Permanentmagnete aufweisen, deren Polarisation so ausgebildet ist, daß der Rotor zwei gegenüberliegende Pole unterschiedlicher Polarität aufweist. Der magnetische Teil des Rotors kann auch durch einen Ring aus permanentmagnetischem Material gebildet werden, der diametral polarisiert ist. Vorzugsweise besteht der Rotor aus einer Glocke aus permanentmagnetischem Material, die diametral zweipolig magnetisiert ist. In dieser Form ist er besonders einfach und preiswert herzustellen, da er nur aus einem Stück besteht.

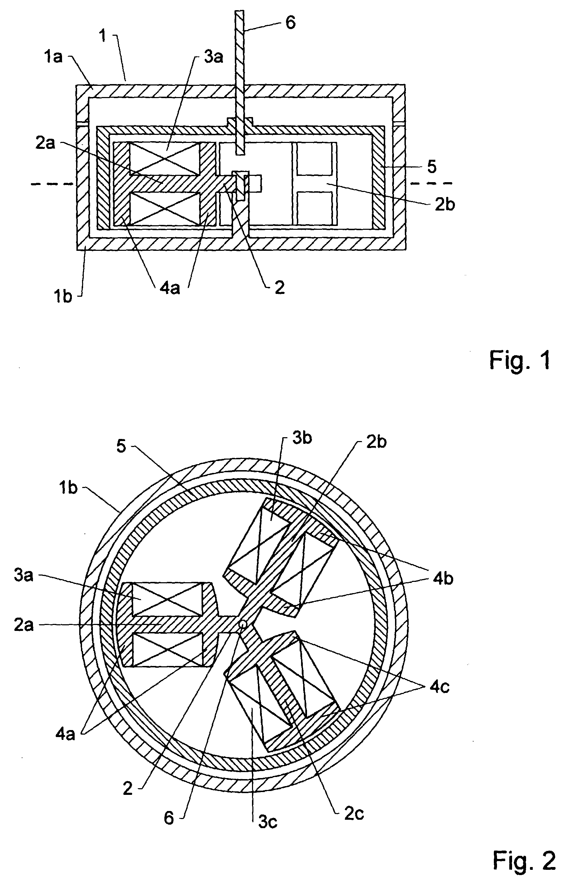

Ein Ausführungsbeispiel nach der Erfindung wird an Hand der Figuren 1 und 2 beschrieben. Es zeigen:
Fig. 1 einen Längsschnitt durch einen Schrittmotor gemäß dem Ausführungsbeispiel der Erfindung, und
Fig. 2 eine Querschnitt durch den Schrittmotor in Fig. 1 entlang der gestrichelten Linie.

In einem Gehäuse 1 mit einem Gehäuseoberteil 1a und einem Gehäuseunterteil 1b ist ein einstückiger Stator 2 aus weichmagnetischem Material mit drei sternförmig in einem Abstand von 120° angeordneten, in Polschuhen endenden Statorbeinen 2a bis 2c mit einem Niet in der Mitte der Statorbeinanordnung an dem Gehäuseunterteil 1b angebracht. Drei Magnetspulen 3a bis 3c sind auf den einzelnen Statorbeinen 2a bis 2c angebracht, die die Kerne der Spulen bilden. Die Beine weisen Wickelraumbegrenzungen 4a bis 4c auf, zwischen denen die Spulen 3a bis 3c gewickelt sind. Ein glockenförmiger, permanentmagnetischer, zweipolig diametral magnetisierter Rotor 5 auf einer Rotorwelle 6 ist über den Stator 2 gestülpt. Die Rotorwelle 6 ist entlang einer Achse, die senkrecht zu einer durch die drei Statorbeine gebildeten Ebene durch die Mitte des Stators 2 verläuft, angeordnet und in dem Gehäusedeckel 1a gelagert. Sie dient als Abtriebswelle.

Die Magnetspulen werden einzeln mit um 120° verschobenen, bipolaren Ansteuerströmen bestromt, um das Drehfeld zu erzeugen. Der Motor weist einen Vollschrittwinkel von 60° auf. Bevorzugt wird der Motor jedoch im Mikroschrittbetrieb benutzt.

In einer weiteren analogen Ausführungsform weist der Stator fünf weichmagnetische mit Magnetspulen umwickelte Beine auf, die jeweils einen Winkel von 72° einschließen. Der Phasenversatz der Spulenströme ist dann ebenfalls 72°. Der Vollschrittwinkel beträgt 36°.

## Patentansprüche

1. Außenläuferschrittmotor mit einem Stator (2) mit einer Anzahl n von sternförmig in gleichen Winkelabständen von 360°/n angeordneten Statorbeinen (2a bis 2c), auf denen jeweils Magnetspulen (3a bis 3c) zur Erzeugung des Drehfeldes angeordnet sind, und einem zweipolig diametral magnetisiertem Permanentmagnetrotor (5), der Glockenform hat und auf dessen Wänden sich die Pole befinden, auf einer Rotorwelle (6), die entlang der Achse der Glocke und entlang einer zu einer durch die Statorbeinanordnung gelegten Ebene senkrecht und durch die Mitte der Statorbeinanordnung verlaufenden Achse angeordnet ist, bei dem der Stator in dem Rotor angeordnet ist, **dadurch gekennzeichnet**, daß die Magnetspulen einzeln mit um 360°/n phasenverschobenen Strömen bestromt werden.

2. Schrittmotor nach Anspruch 1, **dadurch gekennzeichnet**, daß der Stator (2) einteilig ist.

3. Schrittmotor nach einem der vorhergehenden Ansprüche, **dadurch gekennzeichnet**, daß die Magnetspulen (3a bis 3c) direkt auf den Statorbeinen (2a bis 2c) angeordnet sind.

4. Schrittmotor nach Anspruch 3, **dadurch gekennzeichnet**, daß die Statorbeine (2a bis 2c) Wickelraumbegrenzungen (4a bis 4c) aufweisen.

5. Schrittmotor nach einem der vorhergehenden Ansprüche, **dadurch gekennzeichnet**, daß der Stator (2) im Metallspritzgußverfahren aus weichmagnetischem Metallpulver hergestellt ist.

6. Schrittmotor nach einem der vorhergehenden Ansprüche, **dadurch gekennzeichnet**, daß der Rotor (5) einstückig ist.
